# EUROPÄISCHE PATENTSCHRIFT

(11) **EP 0 586 891 B1**
(45) Veröffentlichungstag und Bekanntmachung des Hinweises auf die Patenterteilung: **20.11.1996**
(21) Anmeldenummer: 93112640.3
(22) Anmeldetag: 06.08.1993
(51) Int. Cl.: F02M 25/022, F02M 69/00, F02M 43/00

(54) **Einspritzvorrichtung für eine Brennkraftmaschine**
Injection device for an internal combustion engine
Dispositif d'injection pour moteur à combustion interne

(30) Priorität: 10.09.1992 DE 4230302
(43) Veröffentlichungstag der Anmeldung: 16.03.1994
(73) Patentinhaber: ROBERT BOSCH GMBH, 70442 Stuttgart (DE)
(72) Erfinder: Baeuerle, Michael, D-74354 Besigheim (DE)

(56) Entgegenhaltungen:
- EP-A- 0 420 647
- WO-A-88/02815
- DE-A- 3 240 554
- US-A- 3 865 907
- US-A- 4 216 753
- US-A- 4 798 190
- US-A- 5 020 484
- PATENT ABSTRACTS OF JAPAN vol. 10, no. 299 (M-524)(2355) 11. Oktober 1986 & JP-A-61 112 773 (MAZDA MOTOR CORP) 30. Mai 1986

## Beschreibung

### Stand der Technik

Die Erfindung geht aus von einer Einspritzvorrichtung mit elektromagnetisch betätigbaren Brennstoffeinspritzventilen nach der Gattung des Hauptanspruchs. Aus der DE-OS 32 40 554 ist bereits ein Brennstoffeinspritzventil bekannt, bei dem eine Luftumfassung des eingespritzten Brennstoffs an der Brennstoffeinspritzöffnung vorgesehen ist. Die Luftumfassung am Einspritzventil dient dabei der Bereitstellung von Luft unmittelbar an der Einspritzöffnung des Einspritzventils, um den austretenden Brennstoff von Luft zu ummanteln und sofort aufzubereiten.

Außerdem ist aus der DE-OS 22 52 307 schon eine Flüssigkeits-Mischeinspritzvorrichtung für Brennkraftmaschinen bekannt, bei der eine vom Brennstoff abweichende Flüssigkeit wie Wasser, dem Brennstoff in der Einspritzdüse beigemischt und mit in den Verbrennungsraum eingespritzt wird. Mit dem Einsatz von vom Brennstoff abweichenden Flüssigkeiten, wie Wasser, wird ein Herabsetzen der Verbrennungstemperatur des eingespritzten Brennstoffs erreicht. Zudem erfolgt durch das Einspritzen von Wasser eine deutliche Reduzierung von Stickoxiden in den Verbrennungsgasen.

Bei anderen bekannten Wassereinspritzvorrichtungen wird das Wasser derart der Brennstoffeinspritzöffnung zugeführt, daß unmittelbar im Verbrennungsraum rund um die Flamme ein Wassernebel entstehen kann. Dafür werden mit erheblichem Kostenaufwand separate Wasserkanäle bzw. zusätzliche Einspritzsysteme mit eigenen Wassereinspritzventilen benötigt.

### Vorteile der Erfindung

Die erfindungsgemäße Einspritzvorrichtung mit den kennzeichnenden Merkmalen des Hauptanspruchs hat demgegenüber den Vorteil, daß eine kostengünstige Realisierung einer Flüssigkeitseinspritzung für Brennkraftmaschinen erfolgen kann, indem die bereits vorhandene Luftumfassung des Einspritzventils zugleich zur Zuführung einer Flüssigkeit zur Brennstoffeinspritzöffnung genutzt wird. Die bei bekannten Flüssigkeitseinspritzvorrichtungen benötigten zusätzlichen separaten Einspritzsysteme mit eigenen Flüssigkeitseinspritzventilen entfallen in der vorliegenden Erfindung völlig, da über einen Vernebler bereits ein Flüssigkeit-Luft-Gemisch der Luftumfassung des Einspritzventils bereitgestellt wird. Das Einspritzen eines Flüssigkeit-Luft-Gemisches über die Luftumfassungen von Einspritzventilen in Verbrennungsräume einer Brennkraftmaschine, womit durch das gleichzeitige Einspritzen von Brennstoff aus dem Einspritzventil ein Gemisch aus Brennstoff, Flüssigkeit und Luft entsteht, ermöglicht eine Nutzung des Lambda = 1-Konzepts, d.h. die zugeführte Luftmenge entspricht der theoretisch notwendigen Luftmenge zur vollständigen Verbrennung des Brennstoffs, im gesamten Betriebsbereich der Brennkraftmaschine, speziell einer gemischverdichtenden fremdgezündeten Brennkraftmaschine. Insbesondere gilt dies für den vollastnahen Betriebsbereich von aufgeladenen Brennkraftmaschinen.

Durch die in den Unteransprüchen aufgeführten Maßnahmen sind vorteilhafte Weiterbildungen und Verbesserungen des im Hauptanspruch angegebenen Brennstoffeinspritzventils möglich.

Besonders vorteilhaft ist es, eine Dosiereinrichtung zwischen Flüssigkeitstank und Vernebler einzusetzen, um eine Steuerung der zu vernebelnden Flüssigkeitsmengen zu ermöglichen. Die Dosiereinrichtung empfängt dabei von einem Steuergerät die notwendigen Signale. So ist es möglich, beispielsweise im unteren Teillastbereich der Brennkraftmaschine die Dosiereinrichtung so anzusteuern, daß die Flüssigkeitseinspritzung abgeschaltet wird.

### Zeichnung

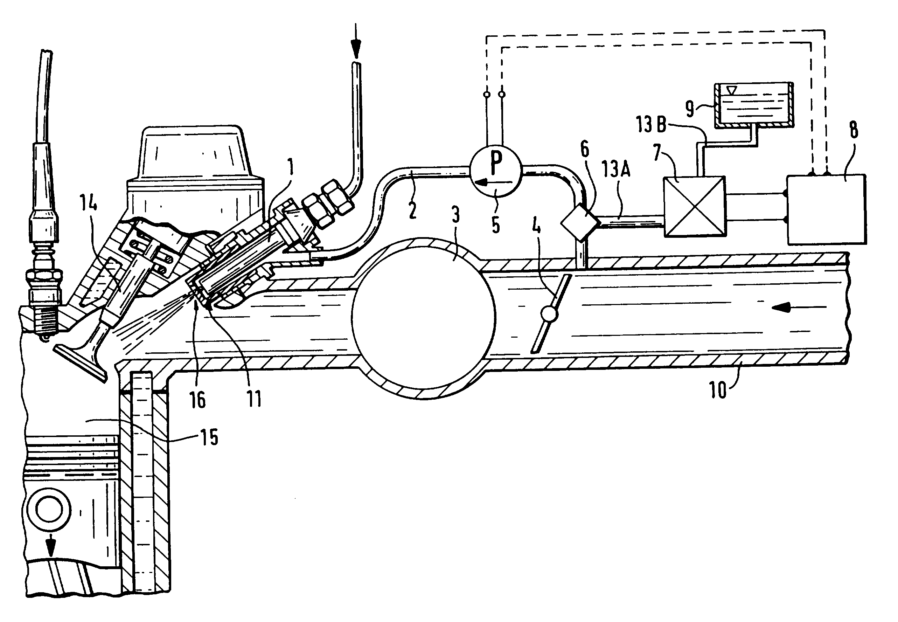

Ein Ausführungsbeispiel der Erfindung ist in der Zeichnung vereinfacht dargestellt und in der nachfolgenden Beschreibung näher erläutert.

### Beschreibung des Ausführungsbeispiels

Die Erfindung betrifft eine Einspritzvorrichtung mit einem Einspritzventil mit Luftumfassung für gemischverdichtende fremdgezündete Brennkraftmaschinen, die sich durch eine dem Einspritzventil vorgeschaltete Anlage zur Erzeugung eines Flüssigkeitsnebels in einer für die Luftumfassung des Einspritzventils notwendigen Luftversorgungsleitung auszeichnet. In der Zeichnung wird eine entsprechende Einspritzvorrichtung vereinfacht gezeigt. Auf die genaue Darstellung des Einspritzventils 1 wird verzichtet, da für diese Einspritzvorrichtung die verschiedensten Bauarten bereits bekannter Einspritzventile mit Luftumfassung zum Einsatz kommen können. Ein derartiges Einspritzventil mit Luftumfassung ist beispielsweise durch die DE-OS 32 40 554 bzw. US-PS 4 545 354 bekannt und wird deshalb hier nicht näher beschrieben.

Wie in schon bekannten Einspritzvorrichtungen für Brennkraftmaschinen erfolgt auch in der erfindungsgemäßen Einspritzvorrichtung die Luftversorgung zur Luftumfassung 11 des durch das Einspritzventil 1 abgespritzten Brennstoffes durch eine Luftversorgungsleitung 2, die in unmittelbarer Nähe des Einspritzendes 16 des Einspritzventils 1 endet, wobei die zugeführte Luft auf den abgespritzten Brennstoff gerichtet ist. Die Ansaugluft für die Brennkraftmaschine wird über einen beispielsweise kreisförmigen Ansaugluftkanal 10 bereitgestellt. Im Ansaugluftkanal 10 befindet sich eine als Drosselorgan dienende Drosselklappe 4, die den Ansaugluftstrom der nicht näher beschriebenen Brennkraftmaschine steuert. Die Luftversorgungsleitung 2 ist so ausgebildet, daß sie in Strömungsrichtung der Ansaugluft gesehen vor der Drosselklappe 4 von dem Ansaugluftkanal 10 abzweigt und somit ständig durch den bei laufender Brennkraftmaschine stets durchströmten Ansaugluftkanal 10 mit Ansaugluft versorgt wird. Der Ansaugluftkanal 10 mündet in Richtung eines Verbrennungsraumes 15 der Brennkraftmaschine hinter der Drosselklappe 4 in ein Sammelsaugrohr 3, das für die Luftverteilung zu den einzelnen Verbrennungsräumen 15 der Brennkraftmaschine verantwortlich ist. Die Einspritzventile 1 zur Brennstoffeinspritzung in die Verbrennungsräume 15 sind an dem Ansaugluftkanal 10 im Bereich von Einlaßventilen 14 angeordnet.

In die Luftversorgungsleitung 2 ist zwischen dem Ansaugluftkanal 10 und der Luftumfassung 11 des Einspritzventils 1 ein Vernebler 6 eingebaut. Mit Hilfe des Verneblers 6 wird der zur Gemischbildungsoptimierung notwendigen Luft in der Luftversorgungsleitung 2 eine vom Brennstoff abweichende Flüssigkeit, wie Wasser, Frostschutzwasser oder ähnliches zugesetzt, so daß am Einspritzende 16 des Einspritzventils 1 ein Gemisch aus Flüssigkeit, Luft und Brennstoff gebildet und in den Ansaugluftkanal 10 gespritzt wird. Der Vernebler 6 kann in verschiedenen Ausführungsformen ausgebildet sein. Als einfachstes Ausführungsbeispiel für die Ausbildung des Verneblers 6 ist eine Einzeldüse vorstellbar, die in die Luftversorgungsleitung 2 ragt und durch die ein Flüssigkeitsnebel im Luftstrom der Luftversorgungsleitung 2 erzielt werden kann. Weiterhin kann der Vernebler 6 beispielsweise durch ein Röhrchen mit mehreren düsenförmigen Öffnungen zum Austritt der Flüssigkeit gebildet werden. Mit einer Fördereinrichtung, beispielsweise einer elektrischen Luftpumpe 5, die an die Luftversorgungsleitung 2 zwischen dem Vernebler 6 und der Luftumfassung 11 des Einspritzventils 1 angeschlossen ist, wird eine ausreichende Luftversorgung gewährleistet. Die elektrische Luftpumpe 5 stellt auch im vollastnahen Betriebsbereich der Brennkraftmaschine einen ausreichend hohen Luftstrom zur Versorgung der Luftumfassung 11 des Einspritzventils 1 zur Verfügung. Diesem Luftstrom in der Luftversorgungsleitung 2 wird insbesondere im vollastnahen Betriebsbereich abhängig von verschiedenen Betriebsparametern, wie Drehzahl, Last und Klopfsignalen, über den Vernebler 6 Flüssigkeit zugeführt.

Die Betriebsparameter werden einem elektronischen Steuergerät 8 zugeführt, das eine Dosiereinrichtung 7 ansteuert, die dem Vernebler 6 zur Flüssigkeitsmengenbeeinflussung vorgesetzt ist, so daß ein optimales Gemischverhältnis am Einspritzventil 1 erzielt werden kann. Die Dosiereinrichtung 7 und der Vernebler 6 sind durch eine erste Flüssigkeitsleitung 13A verbunden, durch die die Flüssigkeitsversorgung des Verneblers 6 in der Luftversorgungsleitung 2 erfolgt. Die von dem elektronischen Steuergerät 8 angesteuerte Dosiereinrichtung 7 wird beispielsweise durch ein Ventil gebildet. Entsprechend den in das Steuergerät 8 eingegangenen Signalen, die aus den Betriebsparametern der Brennkraftmaschine gebildet werden, und deren Auswertung wird der Öffnungs- und Schließmechanismus des Ventils der Dosiereinrichtung 7 vom Steuergerät 8 in seiner Stellung beeinflußt und gibt die notwendigen Flüssigkeitsmengen in Richtung des Verneblers 6 in die erste Flüssigkeitsleitung 13A ab. Die zu dosierenden Flüssigkeitsmengen werden durch einen Flüssigkeitstank 9 bereitgestellt, der direkt mit der Dosiereinrichtung 7 verbunden ist. In einer zweiten Flüssigkeitsleitung 13B erfolgt die Zufuhr der Flüssigkeit vom Flüssigkeitstank 9 zur Dosiereinrichtung 7. Je nach räumlicher Anordnung des Flüssigkeitstanks 9 an der Brennkraftmaschine wird die Förderung der Flüssigkeit in unterschiedlicher Weise gewährleistet. Neben einer einfachen Fallstromanordnung ist auch der Einsatz einer Förderpumpe für die Flüssigkeitszufuhr zur Dosiereinrichtung 7 denkbar. Die notwendigen Flüssigkeitsmengen zur stets optimalen Gemischbildung liegen bei rund 5 % der Brennstoffmenge. Nach entsprechend dem Brennstoffverbrauch großen Zeiträumen ergibt sich die Notwendigkeit des Auffüllens des Flüssigkeitstanks 9.

Das elektronische Steuergerät 8 übernimmt neben der Steuerung der Dosiereinrichtung 7 auch die Steuerung der elektrischen Luftpumpe 5. Somit besteht infolge der Schwankungen der verschiedenen Betriebsparameter jederzeit die Möglichkeit, die Mengenzusammensetzung des Flüssigkeit-Luft-Gemisches zu verändern. So ist es auch denkbar, beispielsweise im unteren Teillastbereich die Flüssigkeitsversorgung durch das Steuergerät 8 über die Dosiereinrichtung 7 zu unterbinden, so daß am Einspritzventil 1 eine fast reine Luftumfassung 11 ohne Flüssigkeitsnebel gebildet wird. Die erfindungsgemäße Form der Flüssigkeitseinspritzung bei Brennkraftmaschinen, vorzugsweise bei gemischverdichtenden fremdgezündeten Brennkraftmaschinen, zeichnet sich durch ihre kostengünstige Realisierung aus. Einspritzvorrichtungen, die über Einspritzventile mit Luftumfassung verfügen lassen eine kostengünstige Installation des Flüssigkeitseinspritzsystems zu, da keine separaten Einspritzsysteme mit eigenen Flüssigkeitseinspritzventilen notwendig sind. Stattdessen ist das Luftversorgungssystem nur durch die Bauelemente der Flüssigkeitsbereitstellung Flüssigkeitstank 9, Dosiereinrichtung 7 und Vernebler 6 zu ergänzen.

## Patentansprüche

1. Einspritzvorrichtung für eine Brennkraftmaschine mit einem Einspritzventil, das mit einer Luftumfassung ausgebildet ist, einem Ansaugluftkanal, einem im Ansaugluftkanal angeordneten verstellbaren Drosselorgan und einer Luftversorgungsleitung zur Bereitstellung von Luft für die Luftumfassung des Einspritzventils, dadurch gekennzeichnet, daß ein Flüssigkeitstank (9) über eine Dosiereinrichtung (7) mit einem Vernebler (6) verbunden ist, der sich in der Luftversorgungsleitung (2) befindet, wodurch ein Flüssigkeit-Luft-Gemisch in der Luftversorgungsleitung (2) gebildet werden kann und dem vom Einspritzventil (1) abgespritzten Brennstoff zuführbar ist.

2. Einspritzvorrichtung nach Anspruch 1, dadurch gekennzeichnet, daß die Flüssigkeitszugabe mittels der Dosiereinrichtung (7) in Abhängigkeit von Betriebsparametern der Brennkraftmaschine durch ein elektronisches Steuergerät (8) steuerbar ist.

3. Einspritzvorrichtung nach Anspruch 1, dadurch gekennzeichnet, daß in der Luftversorgungsleitung (2) stromabwärts des Verneblers (6) eine Fördereinrichtung (5) angeordnet ist.

4. Einspritzvorrichtung nach Anspruch 3, dadurch gekennzeichnet, daß die Fördereinrichtung (5) und die Dosiereinrichtung (7) von demselben Steuergerät (8) ihre Steuersignale erhalten.

5. Einspritzvorrichtung nach einem der Ansprüche 1 oder 3, dadurch gekennzeichnet, daß die Luftversorgungsleitung (2) in Strömungsrichtung der Ansaugluft gesehen vor dem Drosselorgan (4) vom Ansaugluftkanal (10) abzweigt.

6. Einspritzvorrichtung nach Anspruch 2, dadurch gekennzeichnet, daß die Flüssigkeitszugabe in bestimmten Betriebsbereichen der Brennkraftmaschine vom Steuergerät (8) über die Dosiereinrichtung (7) abgeschaltet werden kann.

## Claims

1. Injection device for an internal combustion engine, having an injection valve which is designed with an air containment, an intake air duct, an adjustable throttle member arranged in the intake air duct, and an air supply line for the provision of air for the air containment of the injection valve, characterized in that a liquid tank (9) is connected via a metering device (7) to an atomizer (6) which is located in the air supply line (2), with the result that a liquid/air mixture can be formed in the air supply line (2) and can be fed to the fuel injected by the injection valve (1).

2. Injection device according to Claim 1, characterized in that the addition of liquid by means of the metering device (7) can be controlled as a function of operating parameters of the internal combustion engine by means of an electronic control unit (8).

3. Injection device according to Claim 1, characterized in that a feed device (5) is arranged downstream of the atomizer (6) in the air supply line (2).

4. Injection device according to Claim 3, characterized in that the feed device (5) and the metering device (7) receive their control signals from the same control unit (8).

5. Injection device according to one of Claims 1 or 3, characterized in that the air supply line (2) branches off from the intake air duct (10) upstream of the throttle member (4), as seen in the direction of flow of the intake air.

6. Injection device according to Claim 2, characterized in that the addition of liquid can be cut off in specific operating ranges of the internal combustion engine by the control unit (8) via the metering device (7).

## Revendications

1. Dispositif d'injection pour un moteur à combustion interne comprenant un injecteur avec une enveloppe d'air, un canal d'aspiration d'air, un organe d'étranglement, réglable monté dans le canal d'aspiration d'air et une conduite d'alimentation en air pour fournir l'air assurant l'enveloppe d'air de l'injecteur,
caractérisé en ce que,
un réservoir de liquide (9) est relié à un atomiseur (6) par une installation de dosage (7), cet atomiseur se trouve dans la conduite d'alimentation en air (2), en formant dans la conduite d'alimentation en air (2), un mélange liquide-air qui est fourni au carburant éjecté par l'injecteur (1).

2. Dispositif d'injection selon la revendication 1,
caractérisé en ce que,
l'addition de liquide par l'installation de dosage (7) est commandée selon des paramètres de fonctionnement du moteur à combustion interne par l'appareil de commande électronique (8).

3. Dispositif d'injection selon la revendication 1,
caractérisé en ce que,
dans la conduite d'alimentation en air (2), en aval de l'atomiseur (6), il est prévu une installation de transfert (5).

4. Dispositif d'injection selon la revendication 3,
caractérisé en ce que,
l'installation de transfert (5) et l'installation de dosage (7) reçoivent leurs signaux de commande d'un même appareil de commande (8).

5. Dispositif d'injection selon l'une des revendications 1 ou 3,
caractérisé en ce que,
la conduite d'alimentation en air (2) dérive du canal d'aspiration en air (10) en amont de l'organe d'étranglement (4) .

6. Dispositif d'injection selon la revendication 2,
caractérisé en ce que,
l'adjonction de liquide dans certaines plages de fonctionnement du moteur à combustion interne peut être coupée de l'appareil de commande (8) par l'installation de dosage (7).
